(19) Europäisches Patentamt
European Patent Office
Office européen des brevets

(11) Publication number: **0 194 705**
**B1**

# EUROPEAN PATENT SPECIFICATION

(45) Date of publication of the patent specification: **26.09.90**

(51) Int. Cl.⁵: **C08L 77/00**

(21) Application number: **86200190.6**

(22) Date of filing: **12.02.86**

(54) Impact-resistant polyamide composition.

(30) Priority: **15.02.85 NL 8500427**

(43) Date of publication of application:
**17.09.86 Bulletin 86/38**

(45) Publication of the grant of the patent:
**26.09.90 Bulletin 90/39**

(84) Designated Contracting States:
**AT BE CH DE FR GB IT LI NL SE**

(56) References cited:
**EP-A- 0 050 471**

**Kautschuk + Gummi . Kunststoffe Vol.32, No.10/1979, p. 748 and 752, Transactions New York Academy of Sciences 1973 p. 480**

(73) Proprietor: **STAMICARBON B.V., Mijnweg 1, NL-6167 AC Geleen(NL)**

(72) Inventor: **van Asperen, Pieter Jan, Op de Windhaspel 9, NL-6191 LC Beek(NL)**
Inventor: **Drummen, Theodorus Barbera Renatus, Mercatorplein 3A, NL-6216 CH Maasticht(NL)**

ACTORUM AG

## Description

The invention relates to an impact-resistant polyamide composition. From literature very many impact-resistant polyamine compositions are known. In the US patent specification 4, 174, 358 a polyamide composition is described, 60–99% (wt) of which consists of a polyamide matrix resin and 1–40% (wt) of a dispersed rubber-like polymer provided with adherent sites for the polyamide matrix resin. The dispersed polymer is substantially present in the form of particles of at most 1.0 µm.

In the European patent application no. 0 000 583, laid open to public inspection, highly impact-resistant polyamide alloys are described consisting of 60–95% (wt) of a polyamide and 5–40% (wt) of at least one other high-molecular polymer chosen from the group of aliphatic polyolefins, olefinic copolymers, styrene copolymers, diene polymers or high-molecular organosilicon compounds. Impact modifiers based on these compositions have the disadvantage, that they are hard to granulate and that on storage the granulate will clot and hence give rise to problems in the final processing. By applying anticoagulants known in the art, such as talc, polypropylene powder and other surface modifiers, the disadvantage resulting therefrom for the impact-resistant polyamide compositions can be met; however, in consequence of the presence of the surface modifiers the adhesive property of the impact modifier to the polyamide matrix resin is unfavourably influenced so that an inferior impact-resistant polyamide composition is obtained.

Now an impact-resistant thermoplastic polyamide composition has been found having good mechanical properties without showing the said disadvantages.

The impact-resistant thermoplastic polyamide composition according to the invention consists of:

a) a polyamide matrix with a number average molecular weight of at least 5000 and preferably 25–80%
b) a mixture of 5–80% (wt.) ethylene-propylene rubber and 95–20%, preferably 75–20% (wt.) of a substantially isotactic propylene polymer, substantially consisting of propylene units, said mixture containing adherent groups for the polyamide matrix and
the weight ratio of the polyamide matrix and said mixture being between 99 : 1 and 60 : 40

optionally together with conventional additives.

Preference is given to an ethylene-propylene rubber having a tensile strength of at least 5 N/mm² and a number-average molecular weight between 50,000 and 200,000. More specifically ethylene-propylene-diene rubber is started from, containing a diene as a third monomer in addition to ethylene and propylene. Preference is given to applying one or more non-conjugated dienes with 6-12 carbon atoms in an amount of 0.01-5 moles % calculated on the rubber. The structure of these dienes is such that generally only one double bond is incorporated into the polymer and the other double bond is at the free disposal for conversion with the compound supplying adherent groups. Double bonds which are incorporated well are terminal undisturbed double bonds, or double bonds in a strained ring system, as for instance in a norbornene ring. The double bond that is not incorporated may come from a non-strained ring system (e.g. dicyclopentadiene), from an alkylidene group (e.g. ethylidenenorbornene) or, and preferably, from an alkenyl group and is consequently in this last-mentioned case not directly bonded in or to a ring system. Examples of such compounds are 2-propenylnorbornene, 2-butenylnorbornene, 1,5-heptadiene and 1,4-hexadiene.

The propylene polymer used is preferably isotactic homopolypropylene with a crystallinity of at least 25 % (wt). In addition to these homopolymers copolymers with minor amounts of comonomer, such as ethylene, can be used also. The copolymer may be a random copolymer with, for instance, up to 5 % (wt) ethylene, as well as a block copolymer with, for instance, up to 20 % (wt), preferably 8-15 % (wt), ethylene. The flexural modulus of the propylene polymers is preferably at least 1000 N/mm².

According to the invention it is essential for the mixture of the rubber-like ethylene-propylene copolymer and the propylene polymer to be provided with adherent sites for the polyamide matrix. The most suitable method to provide these is the conversion of the mixture with a compound capable of supplying a polybasic unsaturated carboxylic acid. The compound capable of supplying the polybasic unsaturated carboxylic acid can be applied as acid, anhydride or half ester. Examples that can be mentioned are: maleic acid, fumaric acid, itaconic acid, maleic anhydride, the monoethyl ester of fumaric acid, the monomethyl ester of maleic acid and endo-bicyclo [2,2,1]-5-heptene-2,3-dicarboxylic anhydride.

For the conversion of the rubber-like copolymer and/or the propylene polymer with the unsaturated polybasic carboylic acid the usual processes can be applied. These are carried out in suspension, in solution or in mass. In such conversion preference is given to the use of rubber-like ethylene-propylene copolymer with at least 0.5 moles % diene. Preferably the conversion is effected in an extruder or other equipment where intensive mixing of the components takes place under high shearing forces. These shearing forces may be $10^3$ kg/cm² and higher.

In the conversion in mass the polymeric raw materials show a strong crosslinking tendency as well as a tendency to break down. By a correct choice of raw materials, of the proportion of the raw materials and by the correct adjustment of the conversion conditions the molecular modifications of the polymeric raw materials can stay within the desired specification. In order to obtain a better processability, for instance, it may be an advantage to allow some breakdown to take place. This can be achieved by applying a higher conversion temperature. The conversion preferably takes place in the absence of oxygen.

For the conversion with the unsaturated carboxylic acid it is not necessary for an unsaturation to be present in the polymeric raw materials. The conversion can be promoted by it, producing higher yields. The conversion temperature, too, is important; it should preferably be between 180 and 400 ⅩC, more specifically between 250 and 350 ⅩC. As the temperature rises a shorter period of conversion will suffice. The conversion periods are generally between 0.5 and 60 minutes.

After the conversion, depending on the structure in which the carboxylic acid has been used, an acid, anhydride or half-ester can be obtained, linked with the polymer. In the conversion preference is given to choosing the anhydride form.

The content of adherent sites in the mixture is generally at least 0.1 % (wt), more specifically at least 0.3 % (wt), while a content of more than 3 % (wt), more specifically 1 % (wt), all of it calculated on the ethylene-propylene rubber and propylene polymer mixture, is not necessary.

The polyamide matrix resin of the impact-resistant composition according to the invention is known in the state of the art and comprises amorphous, semi-crystalline and crystalline polyamide resins with a number-average molecular weight of at least 5000. The polyamide resin can be obtained by condensation of equimolar amounts of saturated dicarboxylic acid with 4-12 carbon atoms with a diamine containing 4-14 carbon atoms. It may be an advantage to use an excess of amine, so that a good high-molecular product is obtained with an excess of amine end-groups. Examples of suitable polyamides comprise the polyhexamethylene adipamide (nylon 6,6), polyhexamethylene zelaamide (nylon 6,9), polyhexamethylene sebacamide (nylon 6,10), polyhexamethylene lauramide (nylon 6,12), polytetramethylene adipamide (nylon 4,6). According to the invention it is also possible to use polyamides obtained by ring-opening polymerization of lactams, such as polycaprolactam (nylon 6), polylaurolactam (nylon 12), and the like. It is possible also to use polyamides obtained by the copolymerization of two or more of the above-mentioned polymers, or even terpolymerization. It is also possible to apply mixtures of two or more different polyamides. Preference is given to choosing a polyamide from the class of nylon 4,6, nylon 6,6 and nylon 6.

The polyamide matrix resin and the impact modifier can be mixed with each other as known in the art, preferably in a single or twinscrew extruder. In this mixing proces it may be an advantage for the mixing conditions applied to be such that a good distribution of the impact modifier in the polyamide matrix resin is obtained. In any case it is important for the impact modifier to be present in the polyamide matrix as a finely distributed discrete phase. Generally the particles of the impact modifier are not greater than 2.5 µm, more specifically not greater than 1.0 µm.

The compositions according to the invention can be modified by the presence of one or more additives known in the art, such as thermal stabilizers, UV stabilizers and antioxidants, lubricants and release agents, colourants, fibre and particle-shaped fillers, reinforcing nucleation agents and plasticizers. The stabilizers can be incorporated in the thermoplastic composition in any stage of its preparation. Preferably they are incorporated in an early stage in order to preclude as fas as possible the initiation of the degradation. Suitable antioxidants and thermal stabilizers according to the invention comprise those that are, normally speaking, used with polycondensates. These compounds comprise, for instance, metal halides, such as sodium, potassium, lithium and cuprous halides, for instance chlorides, bromides and iodides, hindered phenols, hydroquinones and various other known compounds or combinations thereof.

The UV stabilizers can be used, for instance, to 2 % (wt) calculated on the weight of the polyamide. To this end the UV stabilizers applied are those generally known to be used for polyamides, such as substituted resorcinols, salicylates, benzenetriazoles, benzophenones, and the like.

Suitable lubricants and release agents, applicable to about 1 % (wt), are stearic acid, stearamides and stearyl alcohol.

The composition may contain up to a maximum of 50 % (wt) fillers, such as fibrous and particle-shaped fillers, as well as reinforcing agents. Examples of suitable substances are carbon fibres, glass fibres, amorphous silica, asbestos, calcium silicate, aluminium silicate, magnesium carbonate, kaolin, chalk, powdered quartz, mica, feldspar, etc. As nucleation agents are used, for instance, talc, calcium chloride, calcium fluoride, alumina and finely distributed polytetrafluoroethylene.

The lubricants and release agents, as well as the fillers and nucleation agents mentioned further, are incorporated preferably in a later stage.

The invention is elucidated by means of the following examples.

Materials used in the examples are:

| | |
|---|---|
| Polyamide | Nylon 6 trade product Ultramid B-3 (BASF), E-modulus = 3000 N/mm$^2$ according to DIN 53457, number-average molecular weight $M_n$ = abt. 20,000. |
| Ethylene-propylene-diene rubber | Keltan grade K 778 (DSM). $M_n$ = abt. 60,000, tensile strength = 6 N/mm$^2$. |
| High-density-poly-ethylene (HDPE) | Stamylan HD grade 7058 DU, (DSM) density 953 kg/m$^3$, melt index 4.5 g/min, E-modulus = 1200 N/mm$^2$ according to ASTM D 790. |
| Low-density poly-ethylene (LDPE) | Stamylan LD grade 2800 (DSM) density 922 kg/m$^3$, melt index 0.3 g/min, E-modulus = 200 N/mm$^2$ according to ASTM D 790. |
| Polypropylene (PP) | Stamylan P grade 83 E 10 (DSM) melt index 0.9 g/min. E-modulus = 1200 N/mm$^2$ according to ASTM D 790. |

The adherent groups are introduced by mixing the ethylene-propylene rubber and the polyalkene in a twin-screw extruder, W and P 30 mm-42 D, in which further 0,5 % (wt) Irganox 1076, calculated on the total weight of ethylene-propylene rubber and polyalkene, and maleic anhydride are added.
Processing conditions: temperature 300 ⊠C, residence time abt. 7 min, speed 100 revolutions per minute, degassing pressure 0.1 bar.
The maleic anhydride content of the resulting product is determined by means of infrared analysis on a thin film of the material. The measured content of acid anhydride/acid groups is recalculated into acid anhydride and expressed in % (wt) calculated on the total weight of ethylene-propylene rubber and polyalkene.

The product provided with adherent groups is admixed into the polyamide matrix with a twin-screw extruder, type W.P. 30 mm-25 D.

Temperature: about 260 °C (measured on the melt)
Yield: 6 kg/hour Speed: 290 revolutions per minute.
In all examples the composition contains 20% (wt.) of the mixture of ethylene-propylene rubber ans polyalkene provided with adherent groups, the remainder being the polyamide matrix. The injection moulding conditions to obtain test specimens of the polyamide compositions were: Set temperature 250°C, speed 450 rpm, mould temperature 80°C, Teknika injection moulding type 22 SR, (screw diameter 22 mm).
Table I shows the polyalkene content of the mixtures of ethylene-propylene rubber and polyalkene provided with adherent groups of the examples. Between brackets ( ) the maleic anhydride content of the composition is given.

## Table 1

| | % (wt) polyalkene | PP | HDPE | LDPE |
|---|---|---|---|---|
| I | 0 (0,7) | | . | |
| II | 10 | A (0,7) | B (0,5) | C (0,7) |
| III | 23 | A (0,7) | B (0,6) | C (0,4) |
| IV | 30 | A (0,6) | | C (0,45) |
| | 33 | | B (0,6) | |
| V | 50 | A (0,6) | B (0,7) | C (0,4) |

The polyalkene-containing compositions have a far weaker tendency to clot than the composition containing only modified EPDM. Of the polyamide compositions incorporating the impact modifiers from Table I the following physical quantities were measured:

IZOD notch impact resistance according to ISO R 180 (KJ/m$^2$) at 23°C and −30°C.

Tensile test according to ISO R 527 (yield point N/mm$^2$), tensile strength at break (N/mm$^2$), elongation at break (%).

E-modulus according to ASTM D (N/mm$^2$).

Maximum flexural strength according to ASTM D 790 (N/mm$^2$). H.D.T. according to ASTM D 648 (°C).

EP 0 194 705 B1

| impact modifier | IZOD | | tensile test | | | max. flex. strength | HDT | E-mod. |
|---|---|---|---|---|---|---|---|---|
| | 23 °C | -30 °C | yield point | tensile strength | elonga-tion at break | | | |
| I | | 36 ± 16 | 50.8 | 40.8 | 34 | 74.3 | 65.8 | 1820 |
| II A | 66.6 ± 2.2 | 19.9 ± 1.3 | | | | | | |
| II B | 77.9 ± 3.4 | 55.9 ± 2.7 | not determined | | | | | |
| II C | 66.8 ± 12 | 49.3 ± 12.3 | | | | | | |
| III A | 80.7 ± 2.2 | 44.8 ± 15.5 | | | | | | |
| III B | 58.6 ± 2.5 | 18.6 ± 0.6 | not determined | | | | | |
| III C | 72.3 ± | 42.3 ± 10.5 | | | | | | |
| IV A | 94.4 ± 1.5 | 56.2 ± 16.7 | 51.4 | 40.9 | 63 | 79.0 | 68.3 | 1880 |
| IV B | 46.3 ± 1.8 | 14.6 ± 0.5 | 53.1 | 41.6 | 78 | 80.3 | 67.7 | 1880 |
| IV C | 56.7 ± 0.9 | 18.3 ± 0.4 | 52.2 | 40.3 | 37 | 75.9 | 68.6 | 1850 |
| V A | 95.1 ± 2.5 | 19.3 ± 2.5 | 54.7 | 42.8 | 77 | 80.5 | 69.8 | 1912 |
| V B | 32.3 ± 0.9 | 11.6 ± 0.6 | 57.3 | 41.7 | 51 | 80.3 | 69.0 | 2036 |
| V C | 37.5 ± 1.1 | 14.1 ± 1.0 | 52.5 | 42.6 | 58 | 77.6 | 68.6 | 1814 |

Table 2 clearly shows that compositions incorporating the impact modifiers according to this invention show a superior impact resistance, while the other mechanical properties are of the same standard or even better than those of the comparative compositions in which, instead of polypropylene, high-density respectively low-density poly-ethylene has been used.

An extra advantage is that the compositions according to the invention show a better colour than composition I.

## Claims

1. Impact-resistant thermoplastic polyamide composition consisting of
a) a polyamide matrix with a number average molecular weight of at least 5000 and
b) a mixture of 5–80% (wt.) ethylene-propylene rubber and 95–20% (wt.) of a substantially isotactic propylene polymer, substantially consisting of propylene units,
said mixture containing adherent groups for the polyamide matrix and
the weight ratio of the polyamide matrix and said mixture being between 99 : 1 and 60 : 40
optionally together with conventional additives.

2. Composition according to claim 1, characterized in that the ethylene-propylene rubber has a tensile strength of at least 5 N/mm$^2$ and a number-average molecular weight between 50,000 and 100,000.

3. Composition according to claim 1 or 2, characterized in that a propylene polymer having an E-modulus of at least 1000 N/mm$^2$ is used.

4. Composition according to any one of claims 1-3, characterized in that the mixture contains 25-80 % (wt) ethylene-propylene rubber and 20-75 % (wt) propylene polymer.

5. Composition according to any one of claims 1-4, characterized in that an ethylene-propylene-diene rubber is used.

6. Composition according to any one of claims 1-5, characterized in that the mixture of ethylene-propylene rubber and propylene polymer containing adherent groups has been obtained by conversion of a mixture of the ethylene-propylene rubber and the propylene polymer with maleic anhydride.

7. Composition according to any one of claims 1-6, characterized in that a polyamide matrix resin is chosen from the class of nylon 4,6, nylon 6,6 and nylon 6.

8. Composition according to any one of claims 1-7, characterized in that the propylene polymer is chosen from the group consisting of isotactic homopolypropylene and propylene-ethylene copolymers with an ethylene content of 15 % (wt) at most.

9. Products containing the composition according to any one of claims 1-8.

## Patentansprüche

1. Schlagfeste thermoplastische Polyamidzusammensetzung bestehend aus a) einer Polyamidmatrix mit einem zahlenmittleren Molgewicht von mindestens 5000 und
b) einer Mischung von 5 bis 80% (Gew.) Äthylen-Propylenkautschuk und 95 bis 20% (Gew.) eines im wesentlichen isotaktischen Propylenpolymers, das im wesentlichen aus Propyleneinheiten besteht, welche Mischung Haftgruppen für die Polyamidmatrix aufweist, und das Gewichtsverhältnis der Polyamidmatrix zur Mischung 99:1 bis 60:40 beträgt, gegebenenfalls zusammen mit herkömmlichen Additiven.

2. Zusammensetzung nach Anspruch 1, dadurch gekennzeichnet, daß der Äthylen-Propylenkautschuk eine Zugfestigkeit von mindestens 5 N/mm$^2$ und ein zahlenmittleres Molgewicht von 50 000 bis 100 000 aufweist.

3. Zusammensetzung nach Anspruch 1 oder 2, dadurch gekennzeichnet, daß ein Propylenpolymer mit einem E-Modul von mindestens 1000 N/mm$^2$ verwendet wird.

4. Zusammensetzung nach einem der Ansprüche 1 bis 3, dadurch gekennzeichnet, daß die Mischung 25 bis 80% (Gew.) Äthylen-Propylenkautschuk und 20 bis 75% (Gew.) Propylenpolymer enthält.

5. Zusammensetzung nach einem der Ansprüche 1 bis 4, dadurch gekennzeichnet, daß ein Äthylen-Propylen-Dienkautschuk verwendet wird.

6. Zusammensetzung nach einem der Ansprüche 1 bis 5, dadurch gekennzeichnet, daß die Haftgruppen enthaltende Mischung von Äthylen-Propylenkautschuk und Propylenpolymer durch Reaktion einer Mischung des Äthylen-Propylenkautschuks und des Propylenpolymers mit Maleinsäureanhydrid erhalten wurde.

7. Zusammensetzung nach einem der Ansprüche 1 bis 6, dadurch gekennzeichnet, daß ein Polyamidmatrixharz aus der Klasse Nylon 4,6, Nylon 6,6 und Nylon 6 gewählt ist.

8. Zusammensetzung nach einem der Ansprüche 1 bis 7, dadurch gekennzeichnet, daß das Propylenpolymer ausgewählt ist aus der Gruppe bestehend aus isotaktischem Homopolypropylen und Propylen-Äthylencopolymeren mit einem Äthylengehalt von höchstens 15% (Gew.).

9. Produkte enthaltend die Zusammensetzung nach einem der Ansprüche 1 bis 8.

**Revendications**

1. Composition de polyamide thermoplastique résistant au choc, qui consiste en:
a) une matrice de polyamide ayant une masse moléculaire moyenne en nombre d'au moins 5000; et
b) un mélange de 5 à 80% en poids de caoutchouc éthylène-propylène et 95 à 20% en poids d'un polymère de propylène sensiblement isotactique consistant sensiblement en motifs de propylène, ledit mélange contenant des groupes adhérents pour la matrice de polyamide, et le rapport pondéral de la matrice de polyamide audit mélange étant compris entre 99:1 et 60:40, facultativement ensemble avec des additifs classiques.

2. Composition selon la revendication 1, caractérisée en ce que le caoutchouc éthylène-propylène présente une résistance à la traction d'au moins 5 N/mm$^2$ et une masse moléculaire moyenne en nombre comprise entre 50.000 et 100.000.

3. Composition selon la revendication 1 ou 2, caractérisée en ce qu'on utilise un polymère de propylène ayant un module E d'au moins 1000 N/mm$^2$.

4. Composition selon l'une quelconque des revendications 1 à 3, caractérisée en ce que le mélange contient de 25 à 80 en poids de caoutchouc éthylène-propylène et de 20 à 75% en poids de polymère de propylène.

5. Composition selon l'une quelconque des revendications 1 à 4, caractérisée en ce qu'on utilise un caoutchouc éthylène-propylène-diène.

6. Composition selon l'une quelconque des revendications 1 à 5, caractérisée en ce qu'on obtient le mélange de caoutchouc éthylène-propylène et de polymère de propylène contenant des groupes adhérents par conversion d'un mélange du caoutchouc éthylène-propylène et du polymère de propylène avec l'anhydride maléique.

7. Composition selon l'une quelconque des revendications 1 à 6, caractérisée en ce qu'une résine de matrice de polyamide est choisie parmi le nylon 4,6, le nylon 6,6 et le nylon 6.

8. Composition selon l'une quelconque des revendications 1 à 7, caractérisée en ce que le polymère de propylène est choisi parmi l'homopolypropylène isotactique et les copolymères propylène/éthylène ayant une teneur en éthylène ne dépassant pas 15% en poids.

9. Produit contenant la composition selon l'une quelconque des revendications 1 à 8.